(19) Europäisches Patentamt
European Patent Office
Office européen des brevets

(11) EP 0 450 693 B1

# (12) EUROPEAN PATENT SPECIFICATION

(45) Date of publication and mention of the grant of the patent: **14.02.1996 Bulletin 1996/07**

(21) Application number: **91200623.6**

(22) Date of filing: **20.03.1991**

(51) Int Cl.[6]: **C08J 9/02**, C08G 18/48, C08G 18/76 // (C08J9/02, C08L75:04), (C08G18/48, 101:00)

(54) **Pipe insulating materials prepared from foam formulations suitable for preparing water-blown heat-insulating material using polyols as softening point improvers.**

Wärmeisoliermaterial für Rohren hergestellt aus Wasser expandierten Wärmeisoliermaterials geeigneter Schaumformulierungen unter Verwendung von Polyolen zur Verbesserung der Erweichungstemperatur.

Matériau thermo-isolant pour des tubes, obtenu à partir d'une composition moussante utilisable pour la préparation d'un matériau thermo-isolant expansé par l'action de l'eau et utilisant des polyols pour améliorer le point de ramollissement.

(84) Designated Contracting States:
**AT BE CH DE DK FR GB IT LI LU NL SE**

(30) Priority: **02.04.1990 EP 90200792**

(43) Date of publication of application:
**09.10.1991 Bulletin 1991/41**

(73) Proprietor:
**SHELL INTERNATIONALE RESEARCH MAATSCHAPPIJ B.V.**
**NL-2596 HR Den Haag (NL)**

(72) Inventors:
- **Jones, David Russel**
  **B-1348 Ottignies Louvain-la-Neuve (BE)**
- **Louche, Didier Pascal Joseph**
  **B-1348 Ottignies Louvain-la-Neuve (BE)**
- **Zuta, Reinhart Berthold**
  **B-1348 Ottignies Louvain-la-Neuve (BE)**

(56) References cited:
**EP-A- 0 091 828**
**EP-A- 0 358 282**
**EP-A- 0 372 539**
**US-A- 4 273 882**

- **KUNSTSTOFFE vol. 72, May 1982, pages 279-282, München, DE; W. KLINGELHOEFER: "Alternativen zu Fluorkohlenwasserstoff als Treibmittel für Polyurethan-Hartschaumsysteme"**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 450 693 B1

## Description

The present invention relates to foam formulations suitable for preparing water-blown heat-insulating material, the use of a softening point improving polyol (blend) in a process for preparing water-blown heat-insulating material.

Polyurethane foams are known to be suitable for use as heat-insulating materials in many applications, such as for instance district heating pipe systems. Thus, polyurethane foam-based insulating materials have good heat-insulation properties and durability, both initially as well as upon ageing (at elevated temperatures).

Because several fully halogenated hydrocarbons (chlorofluorocarbons, commonly referred to as CFC's) normally used as blowing agent are believed to cause environmental problems (for instance their role in the deterioration of the stratospheric ozone layer), there is much effort in research for developing an alternative blowing agent that may (partly or wholly) replace the halogenated hydrocarbon as blowing agent in the standard foam formulations.

It was recognised that water, functioning as a chemical blowing agent, might replace the objected halogenated hydrocarbons. For example European patent application published under No. 0,358,282 discloses foam formulations useful in the preparation of soft flexible polyurethane foam comprising water, to which a polyacrylate, is added as replacement.

Then, the following (intermediate) reaction(s) take(s) place:

1) $R\text{-}N{=}C{=}O + H_2O \rightarrow R\text{-}N(H)\text{-}C(O)\text{-}OH$

2) $R\text{-}N(H)\text{-}C(O)\text{-}OH \rightarrow R\text{-}NH_2 + CO_2$

3) $\underline{R\text{-}N{=}C{=}O + R\text{-}NH_2 \rightarrow R\text{-}N(H)\text{-}C(O)\text{-}N(H)\text{-}R}$

$2\ R\text{-}N{=}C{=}O + H_2O \rightarrow R\text{-}N(H)\text{-}C(O)\text{-}N(H)\text{-}R + CO_2$

European patent specification no. 0 091 828 proposes a process for preparing a rigid polyurethane foam using a polyol mixture of preferred OH value of 450 to 480 with individual polyols of different functionalities ranging from 2 to 8, and a blowing agent which may be water, for use as a heat insulating material for refrigerators.

European patent specification no. 0 372 539 proposes a rigid foam prepared from a polyol composition having an OH value of from 100 to 500 and comprising at least 30 wt% of a polyol component of OH value of from 100 to 500, an average functionality of from 4 to 8 and being the product of a carbohydrate or aromatic initiator with an alkylene oxide, and from a blowing agent comprising water. Not only can rigid appliance foam be prepared but also spray insulation, rigid insulating board stock and laminates.

Foam formulations useful in the preparation of heat-insulating materials of intricate dimensions, such as pipe-insulations, must i.a. have sufficient flow properties to ensure homogeneity throughout the volume to be filled, e.g., the length of the pipe-insulation, usually being more than 3 metres long. Moreover, adhesion of the in-situ produced foam core to the casings of the space to be insulated, for example both the inner side of the outer pipe (e.g., corona-treated HDPE) and adhesion to the outer side of the inner pipe (e.g., sand-blasted steel) of said pipe-insulation, must be excellent. Often, other requirements such as a minimum shear strength and filling density of the formed article must also be met (cf. the CEN and AMPA norms for pipe-insulation).

Applicants discovered when replacing CFC-11 as the blowing agent by water in the standard formulation, that the viscosity of the polyol component became very high and that the adhesion of the foam to outer and/or inner casings deteriorated. They found that these disadvantages could be overcome by lowering the viscosity of the polyol (blend) in the formulation as far as possible. This can e.g. be effected by lowering the average nominal functionality (Fn) and the hydroxyl value (OHv) of the polyol (blend). Applicants also recognized that, to be acceptable, the water-blown heat-insulating material should meet a further requirement, i.e., the need to have an adequate dimensional stability at elevated working temperatures.

Thus, whereas a standard CFC-blown pipe-insulation is not easily softened at working temperatures of up to 130 °C, water-blown pipe-insulations from low-viscosity polyols were found to soften at, or even below such temperatures. The result of such softening is that the inner pipe, instead of being isolated by the foam core, due to gravitational and other forces may come in contact with the (colder) outer pipe, resulting in inadequate insulation. Although the inner pipe may in principle be kept in place by other means of support (studs, spacers etc.), the installation of such supports may cause cost increases due to labour and material costs, reduction in insulating properties, and therefore the more ideal situation would be where the inner pipe is sufficiently supported by the foam core.

As a result of research and experimentation it was found that to ensure a softening point of the water-blown heat-insulating material of 130 °C or above, (i.e., retain the softening point as compared to the CFC-blown heat-insulating material) both the Fn of the polyol or polyol blend used, its OHv, and, (in addition, or as a consequence thereof) its viscosity should be as high as possible.

It will be appreciated that the problem of ensuring both adequate filling and adhesion, and high softening point is

the subject of continuous and extensive research.

It is the object of the invention to select polyols that upon use in foam-formulations employed in water-blown systems at the one hand ensure sufficient flow and adequate adhesion, and at the other hand lead to water-blown materials having a softening point above 130 °C.

Accordingly, the present invention provides for a pipe insulation material which comprises a polyurethane foam prepared from foam formulation comprising (i) a polyol or polyol blend, (ii) one or more organic polyisocyanates, (iii) water, and (iv) auxiliary materials known in the art, wherein the polyol or polyol blend has an average nominal functionality (Fn) varying from 2.7 to 4.3; a hydroxyl value (OHv) of 325 to 500 mg KOH/g, and a viscosity measured at 20 °C of between 350 mPa.s and 2300 mPa.s. Preferably, the polyol or polyol blend has a Fn varying from 3.0 to 3.7; an OHv of 425 to 500 mg KOH/g; and a viscosity of between 400 mPa.s and 1800 mPa.s. More preferably, in view of long term stability, the polyol or polyol blend is based on the elements C, H, and O only. It will be appreciated that the viscosity may also be measured at other temperatures, resulting in slightly different values.

Examples of polyols suitable for use in the present invention are alkoxylated diols, triols and higher OH-functional starting materials, such as propoxylated mono- or diethylene glycol, propoxylated glycerol, propoxylated pentaerythritol, propoxylated sorbitol, etc. Other examples of suitable polyols, are polyols prepared by ethoxylating or ethoxylating/propoxylating said starting materials.

A suitable formulation contains 2 to 7 parts by weight of water per 100 parts by weight polyol (php), preferably 3 to 6 php, and most preferebly 3 to 4 php. The amount of polyisocyanate to be used, indicated by the isocyanate index, varies from 100 to 150, for example from 105 to 140, preferably from 110 to 140 and more preferably from 110 to 125. This amount of polyisocyanate corresponds to the usual amount as used in CFC containing formulations which have shown acceptable properties. However, it will be appreciated that said amount of polyisocyanate to be used may be outside this preferred range. In addition, it is well known in the art to add auxiliaries such as catalysts, silicone oil such as polydimethylsiloxanes, fillers, flame retardants and other additives to the formulation.

Examples of polyisocyanates useful in the process of preparing polyurethane foams for e.g. pipe-insulation are well-known in the art, and are selected from, for instance, aliphatic, cycloaliphatic, and preferably aromatic polyisocyanates; and combinations thereof. Representatives of these types are diisocyanates such as 2,4-toluene diisocyanate, 2,6-toluene diisocyanate, mixtures of 2,4- and 2,6-toluene diisocyanate, 1,5-naphthene diisocyanate, 2,4-methoxyphenyl diisocyanate, 4,4'-diphenylmethane diisocyanate, 4,4'-biphenylene diisocyanate, 3,3'-dimethoxy-4,4'-biphenylene diisocyanate, 3,3'-dimethyl-4,4'-biphenylene diisocyanate, and 3,3'-dimethyl-4,4'-diphenylmethane diisocyanate; triisocyanates such as 4,4',4"-triphenylmethane triisocyanate, and 2,4,6-toluene triisocyanate; and the tetraisocyanates such as 4,4'-dimethyl-2,2',5,5'-diphenylmethane tetraisocyanate; and polymeric isocyanates such as polymethylenepolyphenylene polyisocyanate.

Preferably polymethylenepolyphenylene polyisocyanate and 4,4'-diphenylmethane diisocyanate are used. Crude polyisocyanates, i.e., technical unpurified mixtures of polyisocyanates, may also be used in the compositions of the present invention, such as crude diphenylmethane diisocyanate obtained by the phosgenation of crude diphenylmethane diamine.

Preferably, the polyisocyanate has a viscosity of (nearly) the same magnitude as the polyol. Thus, and more preferred, the polyisocyanate has a viscosity measured at 20 °C of from 100 to 1800 mPa.s.

In order to form the in-situ polyurethane foam-core smoothly, a catalyst useful in preparing foams is employed in the usual manner. Suitable catalysts that may be used are described in European patent specification No. 0,358,282, and include: tertiary amines such as, for example triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'N,N,N'-trimethylisopropyl propylenediamine, 3-diethylaminopropyldiethylamine, dimethylbenzylamine, dimethylcyclohexylamine, and the like; salts of organic acids with a variety of metals such as alkali metals, alkaline earth metals, Al, Sn, Pb, Mn, Co, Ni, and Cu, including, for example, sodium acetate, stannous octoate, stannous oleate, lead octoate, metallic driers such as manganese and cobalt naphthenate, and the like; and organometallic derivatives of tetravalent tin, trivalent and pentavalent As, Sb, and Bi and metal carbonyls of iron and cobalt, as well as other organometallic compounds such as disclosed in U.S. patent specification No. 2,846,408.

It will be appreciated that also combinations of any of the heretofore mentioned polyurethane catalysts may be employed. Usually, the amount of catalyst employed will vary in the range of from 0.01 to 5.0 php. More often, the amount of catalyst used is in the range from 0.2 to 2.0 php.

In addition to the pipe insulation material the present invention also relates to the use of a softening point improving polyol (blend) in foam formulations employed in a process for preparing water-blown pipe heat-insulating materials, which polyol or polyol blend has a Fn varying from 2.7 to 4.3; a OHv of from 325 to 500 mg KOH/g; and a viscosity measured at 20 °C of between 350 mPa.s and 2300 mPa.s. In other words, as compared to the commonly used polyol or polyol blend, which when used in water-blown pipe foam-formulations result in a low softening point, the present polyol or polyol blend, since at least retaining a softening point of 130 °C comprises an improvement.

Finally, the invention relates to water-blown polyurethane pipe heat-insulating materials having a softening point as

measured by Thermo-Mechanical Analysis (TMA, determined by the onset point of the transition curve using conventional techniques) of more than 130 °C, and sufficient mechanical strength at (pipe) service temperature.

The foam formulation for use in the present invention; the use of a softening point improving polyol (blend) in the process for in-situ polymerisation of a water-containing pipe foam formulation; and the water-blown pipe heat insulating material so prepared, are illustrated by the following examples, of which the first three are bottle experiments, (conventional test for determining "pipe-independent" foam properties) and number 4 is an example of pipe-insulation. All parts are by weight unless otherwise designated. In the examples below, the following abbreviations are used.

| | |
|---|---|
| polyol 1 | a pentaerythritol-based polyol (Fn = 4.0, OHv = 350 mg KOH/g, viscosity at 40 °C = 310 $mm^2/s$) |
| polyol 2 | a glycerol-based polyol (Fn = 3.0, OHv = 250 mg KOH/g, viscosity at 20 °C = 410 mPa.s |
| polyol 3 | a sorbitol/glycerol-based polyol (Fn = 4.3, OHv = 520 mg KOH/g, viscosity at 40 °C = 1100 $mm^2/s$ |
| polyol 4 | a glycerol-based polyol (Fn = 3.0, OHv = 560 mg KOH/g, viscosity at 20 °C = 1100 mPa.s |
| Caradate 30 | (trademark), a polymeric MDI |
| Silicone oil | Tegostab (trademark), a grade obtained from Th. Goldschmidt A.G. |
| Dime 6 | (trademark), dimethylcyclohexylamine |

Examples 1 to 6, and comparative examples A and B

All (comparative) examples, except example 6 were conducted by preparing a formulation by weighing all the components except for the isocyanate compound and thoroughly mixing. An appropriate amount of this formulation was weighed into a plastic cup. An appropriate amount of isocyanate was then added and mixed vigorously. The mixture was poured in an aluminium bottle and the foam was allowed to rise. The physical properties were determined after 48 hours. Comparative example A results in a foam having a very low softening point. Comparative example B can not be used for filling long pipes or forms of intricate shape due to its viscosity being too high.

Examples 6 was prepared using a similar procedure and formulation as in example 3, however, mixing the polyol premix with the isocyanate component in a high pressure mixing unit, and dispensing the obtained mixture into a 6 m pipe having standard dimensions (nominal outer diameter of inner steel pipe, 60.3 mm; nominal outer diameter of outer HDPE pipe, 140 mm). It is noted that the softening point is a little lower than in the bottle foams, however, without being too low to be applied.

The foam properties were measured as follows:

| | |
|---|---|
| Density ($kg/m^3$) | ISO 845 |
| Softening point (°C) | TMA measurement (onset point of the the transition curve) |
| Axial shear strength (kPa) | CEN norm EN 253 |

Table

| Foam formulation | 1 | A | B | 2 | 3 | 4 | 5 | 6 |
|---|---|---|---|---|---|---|---|---|
| polyol 1 | 100 | | | | | 57.1 | | |
| polyol 2 | | 100 | | 66.7 | 51.9 | | 28.0 | 50.4 |
| polyol 3 | | | 100 | 33.3 | 48.1 | | 34.0 | 49.6 |
| polyol 4 | | | | | | 42.9 | 38.0 | |
| water | 4.2 | 4.0 | 4.1 | 5.0 | 6.0 | 3.9 | 4.0 | 4.9 |
| silicone oil | 1.5 | 1.5 | 1.5 | 3.0 | 3.0 | 1.0 | 1.0 | 3.0 |
| catalyst | 0.65 | 0.65 | 0.65 | 0.35 | 0.35 | 0.9 | 0.7 | 0.4 |
| Caradate 30 | 159.7 | 148.5 | 202.5 | 178.1 | 206.1 | 179.1 | 185.4 | 185.4 |
| (isocyanate index) | (110) | (125) | (110) | (115) | (115) | (110) | (115) | (115) |
| Viscosity (of blend) | | | | | | | | |
| in mPa.s at 20 °C | 1360 | 330 | 8500 | 1040 | 1580 | 1380 | 1250 | 1680 |
| OHv (of blend) | | | | | | | | |
| in mg KOH/g | 350 | 250 | 520 | 340 | 380 | 440 | 460 | 384 |
| Fn (of blend) | 4.0 | 3.0 | 4.3 | 3.4 | 3.6 | 3.4 | 3.5 | 3.6 |
| | | | | | | | | |
| Foam properties | | | | | | | | |
| Filling density, $kg/m^3$ | 90 | 90 | 90 | 80 | 80 | 90 | 90 | 96 |
| Core density, $kg/m^3$ | | | | | | | | > 60 |
| Overall density, $kg/m^3$ | | | | | | | | > 80 |
| Axial shear strength, kPa | | | | | | | | 120 |
| Softening point °C | 141 | 95 | 180 | 138 | 155 | 150 | 145 | 141 |

## Claims

1. Pipe insulation material which comprises a polyurethane foam prepared from a foam formulation comprising (i) a polyol or polyol blend, (ii) one or more organic polyisocyanates, (iii) water, and (iv) auxiliary materials known in the art, wherein the polyol or polyol blend has an average nominal functionality (Fn) varying from 2.7 to 4.3; a hydroxyl value (OHv) of 325 to 500 mg KOH/g, and a viscosity measured at 20°C of between 350 mPa.s and 2300 mPa.s.

2. Pipe insulation material as claimed in claim 1, wherein the polyol or polyol blend (i) of the foam formulation has a Fn varying from 3.0 to 3.7; an OHv of 425 to 500 mg KOH/g; and a viscosity of between 400 mPa.s and 1800 mPa.s.

3. Pipe insulation material as claimed in claim 1 or claim 2, wherein the polyol or the polyol blend (i) of the foam formulation is selected from a propoxylated and/or ethoxylated mono- or diethylene glycol, glycerol, pentaerythritol, or sorbitol.

4. Pipe insulation material as claimed in any one of claims 1 to 3, wherein the foam formulation contains 2 to 7 parts by weight of water per 100 parts by weight polyol (php), preferably 3 to 6 php.

5. Pipe insulation material as claimed in any one of claims 1 to 4, wherein the or each polyisocyanate in the foam formulation is selected from (crude) 4,4'-diphenylmethane diisocyanate and polymethylenepolyphenylene polyisocyanate.

6. Pipe insulation material as claimed in any one of claims 1 to 5, which also acts as a structural support for the pipe.

7. A method of insulating a pipe which is to operate at an elevated working temperature which comprises preparing a polyurethane foam in situ around the pipe from a foam formulation as described in claim 1.

8. A method as claimed in claim 7, wherein the pipe forms part of a district heating pipe system.

9. The use of a softening point improving polyol or polyol blend in foam formulations employed in a process for preparing water-blown pipe heat-insulating materials, wherein the polyol or polyol blend has a Fn varying from 2.7 to 4.3; a OHv of from 325 to 500 mg KOH/g; and a viscosity measured at 20°C of between 350 mPa.s and 2300 mPa.s.

10. A water-blown polyurethane pipe heat-insulating material, formed from a foam formulation as described in claim 1, which has a softening point (determined by TMA; the onset point of the transition curve) of more than 130°C.

## Patentansprüche

1. Rohrisoliermaterial, welches einen Polyurethanschaumstoff umfaßt, hergestellt aus einer Schaumformulierung, enthaltend (i) ein Polyol oder Polyolgemisch, (ii) ein oder mehrere organische Polyisocyanate, (iii) Wasser und (iv) in der Technik bekannte Hilfsmaterialien, worin das Polyol oder Polyolgemisch eine mittlere nominelle Funktionalität (Fn) von 2,7 bis 4,3; einen Hydroxylwert (OHv) von 325 bis 500 mg KOH/g und eine bei 20°C gemessene Viskosität von 350 mPa.s bis 2300 mPa.s aufweist.

2. Rohrisoliermaterial nach Anspruch 1, worin das Polyol oder Polyolgemisch (i) der Schaumformulierung eine Fn von 3,0 bis 3,7; einen OHv von 425 bis 500 mg KOH/g; und eine Viskosität von 400 mPa.s bis 1800 mPa.s aufweist.

3. Rohrisoliermaterial nach Anspruch 1 oder 2, worin das Polyol oder das Polyolgemisch (i) der Schaumformulierung unter einem propoxylierten und/oder ethoxylierten Mono- oder Diethylenglykol, Glycerin, Pentaerythrit oder Sorbit ausgewählt ist.

4. Rohrisoliermaterial nach einem der Ansprüche 1 bis 3, worin die Schaumformulierung 2 bis 7 Gewichtsteile Wasser je 100 Gewichtsteile Polyol (php), vorzugsweise 3 bis 6 php, enthält.

5. Rohrisoliermaterial nach einem der Ansprüche 1 bis 4, worin das oder jedes Polyisocyanat in der Schaumformulierung unter (rohem) 4,4'-Diphenylmethandiisocyanat und Polymethylenpolyphenylenpolyisocyanat ausgewählt ist.

6. Rohrisoliermaterial nach einem der Ansprüche 1 bis 5, das auch als Strukturträger für das Rohr wirkt.

7. Verfahren zum Isolieren eines Rohres, das bei erhöhter Arbeitstemperatur betrieben werden soll, welches das Ausbilden eines Polyurethanschaums in situ um das Rohr aus einer Schaumformulierung umfaßt, wie in Anspruch 1 beschrieben.

8. Verfahren nach Anspruch 7, worin das Rohr einen Teil eines Fernwärmerohrsystems bildet.

9. Verwendung eines den Erweichungspunkt verbessernden Polyols oder Polyolgemisches in Schaumformulierungen, die in einem Verfahren zur Herstellung von mit Wasser expandierten Rohrwärmeisoliermaterialen eingesetzt werden, worin das Polyol oder Polyolgemisch eine Fn im Bereich von 2,7 bis 4,3; einen OHv von 325 bis 500 mg KOH/g; und eine bei 20°C gemessene Viskosität von 350 mPa.s bis 2300 mPa.s aufweist.

10. Mit Wasser expandiertes Polyurethan-Rohrwärmeisoliermaterial, gebildet aus einer Schaumformulierung, wie in Anspruch 1 beschrieben, das einen Erweichungspunkt (bestimmt durch TMA; Ansatzpunkt der Übergangskurve) von über 130°C aufweist.

## Revendications

1. Matériau isolant pour tubes ou tuyaux, qui comprend une mousse de polyuréthanne obtenue à partir d'une composition de mousse comprenant (i) un polyol ou un mélange de polyols, (ii) un ou plusieurs polyisocyanates organiques, (iii) de l'eau et (iv) des matières auxiliaires bien connues des spécialistes, caractérisé en ce que le polyol ou le mélange de polyols possède une fonctionnalité nominale (Fn) qui varie de 2,7 à 4,3, un indice d'hydroxyle (iOH) de 325 à 500 mg de KOH/g et une viscosité, mesurée à 20°C, comprise entre 350 mPa.s et 2300 mPa.s.

2. Matériau d'isolation de tuyaux ou tubes suivant la revendication 1, caractérisé en ce que le polyol ou le mélange de polyols (i) de la composition de mousse possède une Fn qui varie de 3,0 à 3,7, un iOH de 425 à 500 mg de KOH/g et une viscosité comprise entre 400 mPa.s et 1800 mPa.s.

3. Matériau d'isolation de tuyaux ou de tube suivant la revendication 1 ou la revendication 2, caractérisé en ce que le polyol ou le mélange de polyols (i) de la composition de mousse est choisi parmi le sorbitol, le pentaérythritol, le glycérol, le monodiéthylèneglycol ou le diéthylèneglycol, éthoxylé et/ou propoxylé.

4. Matériau d'isolation de tuyaux ou de tube suivant l'une quelconque des revendications 1 à 3, caractérisé en ce que la composition de mousse contient 2 à 7, de préférence 3 à 6, parties en poids d'eau par 100 parties en poids de polyol.

5. Matériau d'isolation de tuyaux ou tubes suivant l'une quelconque des revendications 1 à 4, caractérisé en ce que le ou chaque polyisocyanate dans la composition de mousse est choisi parmi le polyméthylènepolyphénylènepolyisocyanate et le diisocyanate de 4,4'-diphénylméthane (brut).

6. Matériau d'isolation de tuyaux ou tubes suivant l'une quelconque des revendications 1 à 5, caractérisé en ce qu'il sert également de support de structure pour le tube ou le tuyau.

7. Méthode d'isolation d'un tuyau ou tube qui doit fonctionner à une température de travail élevée, caractérisé en ce que l'on prépare une mousse de polyuréthanne in situ autour du tuyau ou tube à partir d'une composition de mousse suivant la revendication 1.

8. Méthode suivant la revendication 7, caractérisée en ce que le tuyau ou tube fait partie d'un système de tuyauterie de chauffage urbain.

9. Utilisation d'un polyol ou d'un mélange de polyols améliorant le point de ramollissement dans des compositions de mousse que l'on emploie dans un procédé de fabrication de matériaux thermo-isolants pour tuyaux ou tubes, gonflés ou expansés à l'eau, caractérisée en ce que le polyol ou le mélange de polyols possède une Fn qui varie de 2,7 à 4,3, un iOH de 325 à 500 mg de KOH/g et une viscosité, mesurée à 20°C, comprise entre 350 mPa.s et 2300 mPa.s.

10. Matériau thermo-isolant pour tubes ou tuyaux en polyuréthanne expansé ou gonflé à l'eau, formé à partir d'une composition de mousse telle que décrite dans la revendication 1, qui possède un point de ramollissement (déterminé par ATM, le point de départ de la courbe de transition) supérieur à 130°C.